# EUROPÄISCHE PATENTSCHRIFT

(11) **EP 1 424 246 B1**
(45) Veröffentlichungstag und Bekanntmachung des Hinweises auf die Patenterteilung: **12.10.2005**
(21) Anmeldenummer: 03450258.3
(22) Anmeldetag: 25.11.2003
(51) Int. Cl.: B60R 21/26

(54) **Kaltgasgenerator**
Cold gas generator
Générateur de gaz froid

(30) Priorität: 29.11.2002 AT 80702 U
(43) Veröffentlichungstag der Anmeldung: 02.06.2004
(73) Patentinhaber: iSi Airbag GmbH, 1210 Wien (AT)
(72) Erfinder: Schäfer, Dietmar, 1130 Wien (AT); Springer, Norbert, 1080 Wien (AT)
(74) Vertreter: KLIMENT & HENHAPEL

(56) Entgegenhaltungen:
- EP-A- 1 352 793
- WO-A-99/12775
- DE-A- 10 040 822
- DE-A- 19 529 553

## Beschreibung

Die vorliegende Erfindung bezieht sich auf einen Kaltgasgenerator zum Aufblasen eines Gassacks (Airbags).

Solche Kaltgasgeneratoren dienen dazu, mit einem Gasdruckbehälter verbundenen Gassack, beispielsweise ein Airbag in einem Auto, aufzublasen.

Ein bei der Befüllung von Airbags auftretendes Problem ist die Steuerung des Aufblassverhaltens des Airbags durch Gas aus dem Gasdruckbehälter, welche einerseits eine schnelle und vollständige Füllung des Airbags garantieren und andererseits aber verlässlich die mechanische Zerstörung des Airbags sowie die Gefährdung des Insassen durch den beim Öffnen des mit dem Airbag in Verbindung stehenden Gasdruckbehälters vermeiden soll.

Um das Aufblasverhalten entsprechend zu steuern, sind beispielsweise Auslösevorrichtungen zur Zerstörung des die Ausströmöffnung verschließenden Dichtelements vorgesehen, welche über eine Zündpille eine Treibladung zünden, die je nach Zusammensetzung durch die Erwärmung des ausströmenden Gases wiederum wesentlich zum Aufblasverhalten beiträgt. Dies hat jedoch den Nachteil, dass die Anordnung einer zusätzlichen Treibladung erforderlich ist. Diese führt jedoch dazu, dass nach dem Auslösen eines Airbags giftige Dämpfe, die durch das Verbrennen der zusätzlichen Treibladung entstehen, in das Wageninnere entweichen können welche auch einen unangenehmen Geruch aufweisen. Bei kleineren Unfällen, in welchen der Airbag zwar ausgelöst hat, das Kraftfahrzeug jedoch weiterverwendet werden kann, führt dies dazu, dass sich dieser unangenehme Geruch in die Polsterung der Sitze überträgt und nicht mehr entfernt werden kann.

Dies führte dazu, dass Gasgeneratoren ohne zusätzliche Treibladungen ausgestattet wurden. Man spricht in diesem Fall von Kaltgasgeneratoren. Ein solcher ist beispielsweise aus der WO 99/12775 bekannt. Um das Aufblasverhalten zu steuern, ist dort vor der Ausströmöffnung des Gasdruckbehälters eine Drossel angeordnet, um eine mechanische Beschädigung des Airbags sicher auszuschließen, indem der Druckstoß, der durch die Entleerung des Gasdruckbehälters entsteht, möglichst klein gehalten wird. Die Drossel ist als einfache Lochblende ausgeführt. Jenes an die Ausströmöffnung unmittelbar angrenzende Teilvolumen ist dabei sehr klein gewählt, um den ersten Druckstoß beim Öffnen zu minimieren. Erst dann strömt das im restlichen Gasdruckbehälter befindliche Gas durch die Drossel und in weiterer Folge durch die Ausströmöffnung in den Airbag. Eine darüber hinausgehende Steuerung des Aufblasverhaltens über einen längeren Zeitraum ist jedoch nicht möglich.

Eine weitere Möglichkeit der Steuerung des Aufblasverhaltens kann dadurch erreicht werden, dass mehrere Gasdruckbehälter vorgesehen sind, die auch unterschiedliche Gase enthalten können.

Solche Gasgeneratoren sind beispielsweise aus der US 5,820,161 bekannt. Aber auch aus der US 5,301,978 und der US 2002/130502 A1 sind Gasgeneratoren zum Aufblasen eines Airbags bekannt, welche zwei Gasdruckbehälter aufweisen. Diese Gasgeneratoren weisen jedoch alle einen komplizierten Auslösemechanismus auf. In allen drei Fällen müssen mechanische Teile bewegt werden, um die Austrittsöffnungen der Gasdruckbehälter freizulegen. Dieser Umstand erfordert aufwändige Konstruktionen und kleine Fertigungstoleranzen, um die Beweglichkeit der Teile gewährleisten zu können.

Aus der US 5,593,180 ist ebenfalls ein Gasgenerator mit zwei Gasdruckbehältern bekannt. Das Ausströmen des Gases wird dort durch Zerstörung einer die Gasdruckbehälter verschließenden gemeinsamen Membran initiiert. Durch Abhängigkeit beider Gasdruckbehälter von einer Membran ist jedoch die Steuerung des Aufblasverhaltens nur bedingt möglich.

Aus der DE 100 40 822 A und der älteren, nach veröffentlichten EP-A- 1 352 793 sind Gasgeneratoren bekannt, welche voneinander unabhängig betätigbare Gaskammern aufweisen. Durch den Einsatz von der Anzahl der Gaskammern entsprechenden Zündvorrichtungen, gestaltet sich die Herstellung jedoch kompliziert und kostenintensiv.

Ziel der vorliegenden Erfindung ist es daher, diese Nachteile zu verhindern und einen Gasgenerator der eingangs erwähnten Art zu schaffen, dessen Aufblasverhalten durch Einsatz mehrerer Gaskammern über einen längeren Zeitraum steuerbar ist, wobei gleichzeitig der Herstellaufwand vereinfacht werden soll. Ein weiteres Ziel der vorliegenden Erfindung ist ein Beitrag zur Verbesserung der sogenannten OOP (out of position) Problematik. Dabei handelt es sich um die Problematik, dass ein sich nicht in optimaler Sitzposition befindlicher, zu schützender Insasse durch einen sich zu schnell entfaltenden Airbag verletzt werden kann.

Ein weiteres Ziel der vorliegenden Erfindung ist es, die mit der Verwendung von zusätzlichen Treibladungen einhergehenden Probleme zu vermeiden.

Erfindungsgemäß wird dies durch einen Kaltgasgenerator mit den Merkmalen des Anspruchs 1 erreicht. Durch den Einsatz eines zweiten bzw. weiterer Gasdruckbehälter ist es möglich, das Aufblasverhalten entscheidend zu beeinflussen. Die Gasdruckbehälter können unterschiedliche charakteristische Merkmale haben, wie aus den Unteransprüchen ersichtlich ist. Deren Ausströmöffnungen sind erfindungsgemäß über separate, zerstörbare Membranen verschlossen, die unterschiedliche Charakteristiken aufweisen können. Als Auslöser findet jedoch erfindungsgemäß lediglich eine einzige Zündpille Verwendung, wodurch sich die Konstruktion des Gasgenerators erheblich vereinfacht.

Gemäß den kennzeichnenden Merkmalen des Anspruchs 2 kann die Ausströmcharakteristik der einzelnen Gasdruckbehälter durch Variation der ausströmenden Menge an Gas gesteuert werden.

Auch durch den den kennzeichnenden Merkmalen des Anspruchs 3 entsprechenden Einsatz unterschiedlicher Gase, die unterschiedliche Eigenschaften aufweisen, kann das Aufblasverhalten gesteuert werden.

Durch das kennzeichnende Merkmal des Anspruchs 4 kann auch durch unterschiedliche Drücke in den einzelnen Gasdruckbehältern, Einfluss auf das Aufblasverhalten genommen werden.

Durch das kennzeichnende Merkmal des Anspruchs 5 ist es durch den Einsatz unterschiedlich großer Gasdruckbehälter möglich, das Aufblasverhalten zu beeinflussen.

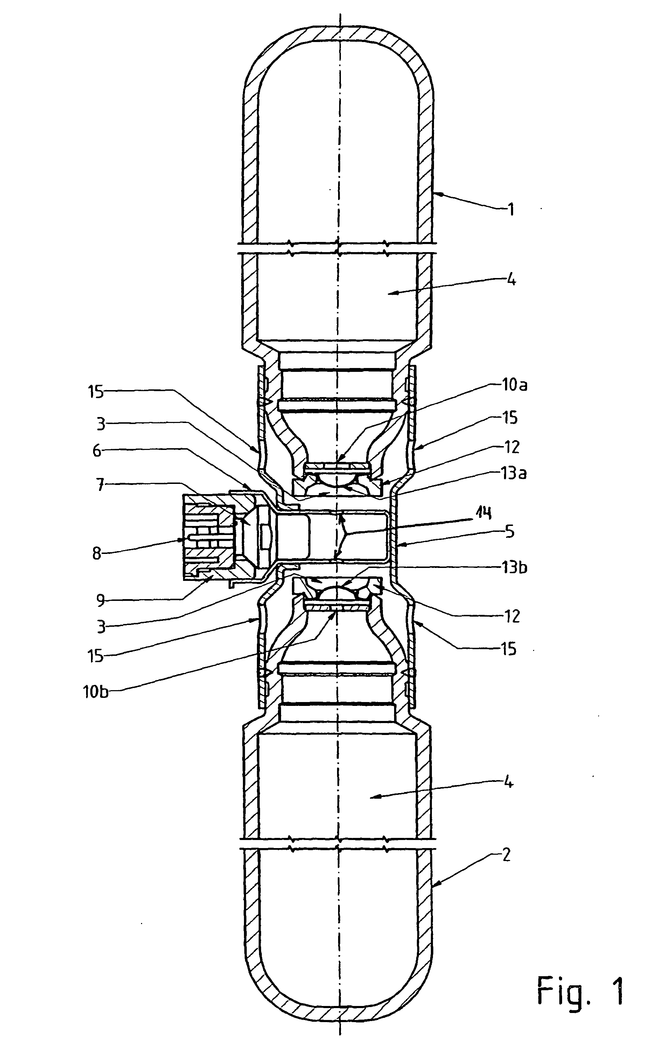

Im Anschluss erfolgt nun eine detaillierte Beschreibung der Erfindung anhand eines Ausführungsbeispiels. Dabei zeigt
- Fig.1: eine Schnittansicht eines erfindungsgemäßen Kaltgasgenerators mit einer Zündpille

Fig.1 zeigt einen erfindungsgemäßen Kaltgasgenerator. Zwei Gasdruckspeicher 1,2 sind einander gegenüber angeordnet und mittels eine Zwischenstücks 5 fix miteinander verbunden, so dass die beiden Ausströmöffnungen 3 der Gasdruckbehälter 1,2 gegeneinander gerichtet sind. Am Zwischenstück 5 sind Öffnungen 15 vorgesehen, über welche nach Aktivierung des Kaltgasgenerators der Gassack (nicht gezeichnet) aufgeblasen wird. Die Ausströmöffnungen 3 sind mittels jeweils eines Dichtelementes 13a,13b, im vorliegenden Fall eine Membran, verschlossen, welche von einem Membranhalteteil 12 in Position gehalten wird. Vorzugsweise sind in Ausströmrichtung gesehen vor dem Dichtelement 13a,13b in jedem Gasdruckspeicher 1,2 Drosselöffnungen 10a,10b angeordnet, die beispielsweise als einfache Lochblende ausgebildet sein können.

Zwischen den Ausströmöffnungen 3 der Gasspeicher 1,2 ist der Öffnungsmechanismus angeordnet, welcher zur Zerstörung der Dichtelemente 13a,13b dient und im wesentlichen aus einer Zündpillenhalterung 9, einer Zündpille 7 und einer Auslasskammer 6 besteht. Diese ist mit zwei Fokussieröffnungen 14 versehen.

Bei der Zündpille 7 handelt es sich um einen seit langem bekannten Anzünder, dessen wesentlicher Aufbau eine geringe Menge Zündladung in einem Gehäuse aufweist. In die Zündladung sind von außerhalb der Zündpille 7 elektrisch kontaktierbare Zündpins 8 geführt, welche nach Anlegen einer Spannung die Zündladung zünden.

Soll der Gassack, insbesondere der Airbag aufgeblasen werden, wird, wie erwähnt, zuerst die Zündpille 7 durch Anlegen eines elektrischen Zündimpulses gezündet. Die Energiefreisetzung wird in der Auslasskammer 6 gebündelt und als Heißgasstrahl über die Fokussieröffnungen 14 konzentriert auf den jeweils höchsten Punkt der Dichtelemente 13a,13b geleitet, welche die Ausströmöffnungen 3 der Gasspeicher 1,2 verschließen. An diesem Punkt tritt im Zuge der Druckbelastung der Dichtelemente 13a,13b durch die Gasfüllung die höchste Spannung auf, wodurch sich dort ihre dünnste Stelle ergibt. Da der an sich bekannte Werkstoff der Dichtelemente 13a,13b bei Temperatureinwirkung stark an Festigkeit verliert bewirkt die partielle Erhitzung durch den gebündelten Heißgasstrahl eine Schwächung und damit die Zerstörung der unter Last stehenden Dichtelemente 13a,13b im Bereich des angeströmten höchsten Punktes. Die Dynamik des entweichenden, stark komprimierten Gase in den Gasspeichern 4 bewirkt in Folge die vollständige Freilegung der Ausströmöffnungen 3. Die Zerstörung der Dichtelemente 13a,13b erfolgt durch thermische Schwächung. Der Innendruck der Gasdruckbehälter 1,2 zerstört dann die thermisch geschwächten Dichtelemente 13a,13b.

Durch den Einsatz von mehreren Gasdruckbehältern 1,2 kann die Ausströmcharakteristik des gesamten Kaltgasgenerators ganz wesentlich beeinflusst werden. Es besteht die Möglichkeit des Einsatzes unterschiedlicher Gase und/oder Drücke, sowie unterschiedlicher Gasmengen. Durch Variation der Drosselöffnungen 10a,10b kann ebenfalls ganz wesentlich auf das Aufblasverhalten Einfluss genommen werden.

## Patentansprüche

1. Kaltgasgenerator zum Aufblasen eines Gassacks mit Hilfe eines Gases, mit mindestens zwei Gasdruckbehältern (1,2), die beide jeweils mit einer Ausströmöffnung (3) versehen sind, welche mittels jeweils eines zerstörbaren Dichtelements (13a,13b) verschlossenen sind, wobei die Zerstörung der Dichtelemente (13a,13b) durch einen auf die Dichtelemente (13a,13b) gerichteten Heißgasstrahl erfolgt, der ausschließlich durch Zündung einer einzigen, durch Anlegen eines elektrischen Impulses aktivierbaren Zündpille (7,7a,7b) erzeugt wird.

2. Kaltgasgenerator nach Anspruch 1, **dadurch gekennzeichnet, dass** vor den Ausströmöffnungen (3) Drosselöffnungen (10a,10b) vorgesehen sind, die vorzugsweise unterschiedlichen Durchmesser aufweisen.

3. Kaltgasgenerator nach Anspruch 1 und 2, **dadurch gekennzeichnet, dass** die Gasdruckbehälter (1,2) mit unterschiedlichen Gasen gefüllt sind.

4. Kaltgasgenerator einem der Ansprüche 1 bis 3, **dadurch gekennzeichnet, dass** die Gase in den Gasdruckbehältern (1,2) unterschiedliche Drücke aufweisen.

5. Kaltgasgenerator nach einem der Ansprüche 1 bis 4, **dadurch gekennzeichnet, dass** die Volumina der Gasdruckbehälter (1,2) unterschiedlich sind.

## Claims

1. A cold-gas generator for inflating a gas bag with the help of a gas, comprising at least two gas pressure containers (1, 2) which are each provided with a discharge opening (3) which are each sealed by means of a destructible sealing element (13a, 13b), with the destruction of the sealing elements (13a, 13b) occurring by a hot gas jet directed at the sealing elements (13a, 13b), which jet is exclusively produced by igniting a single primer (7, 7a, 7b) which can be activated by applying an electric pulse.

2. A cold-gas generator according to claim 1, **characterized in that** throttle openings (10a, 10b) are provided before the discharge openings (3), which throttle openings preferably have a different diameter.

3. A cold-gas generator according to claim 1 and 2,
**characterized in that** the gas pressure containers (1, 2) are filled with different gases.

4. A cold-gas generator according to one of the claims 1 to 3, **characterized in that** the gases in the gas pressure containers (1, 2) have different pressures.

5. A cold-gas generator according to one of the claims 1 to 4, **characterized in that** the volumes of the gas pressure containers (1, 2) are different.

## Revendications

1. Générateur de gaz froid pour le gonflage d'un sac de gaz à l'aide d'un gaz, du type comportant au moins deux récipients de gaz mis en pression (1, 2) munis chacun d'une ouverture d'écoulement (3) fermée chacune par un élément d'étanchéité (13a, 13b) destructible, les éléments d'étanchéité (13a, 13b) étant détruits par un jet de gaz chaud dirigé sur les éléments d'étanchéité (13a, 13b) et généré uniquement par amorçage d'une seule et unique pastille explosive (7, 7a, 7b) activable par application d'une impulsion électrique.

2. Générateur de gaz froid selon la revendication 1,
**caractérisé en ce que** des goulots d'étranglement (10a, 10b), de préférence de différents diamètres, sont prévus devant les ouvertures d'écoulement (3).

3. Générateur de gaz froid selon la revendication 1 et 2, **caractérisé en ce que** les récipients de gaz mis en pression (1, 2) sont remplis de différents gaz.

4. Générateur de gaz froid selon l'une quelconque des revendications 1 à 3, **caractérisé en ce que** les gaz dans les récipients de gaz mis en pression (1, 2) sont à différentes pressions.

5. Générateur de gaz froid selon l'une quelconque des revendications 1 à 4, **caractérisé en ce que** les volumes des récipients de gaz mis en pression (1, 2) sont différents.
